# EUROPÄISCHE PATENTSCHRIFT

(11) **EP 3 126 692 B1**
(45) Veröffentlichungstag und Bekanntmachung des Hinweises auf die Patenterteilung: **25.04.2018**
(21) Anmeldenummer: 15744846.5
(22) Anmeldetag: 31.03.2015
(51) Int. Cl.: F16D 13/64

(54) **FEDERELEMENT FÜR EINE REIBVORRICHTUNG**
SPRING ELEMENT FOR A FRICTION DEVICE
ÉLÉMENT RESSORT POUR DISPOSITIF DE FRICTION

(30) Priorität: 01.04.2014 AT 502412014
(43) Veröffentlichungstag der Anmeldung: 08.02.2017
(73) Patentinhaber: Miba Frictec GmbH, 4663 Laakirchen (AT)
(72) Erfinder: BASIEWICZ, Michael, 75053 Gondelsheim (DE); ASCHOFF, Michael, 77815 Bühl (DE); MERKEL, Philipp, 71640 Ludwigsburg (DE); MÜHLEGGER, Markus, A-4812 Pinsdorf (AT)
(74) Vertreter: Burger, Hannes
(86) Internationale Anmeldenummer: PCT/AT2015/050083
(87) Internationale Veröffentlichungsnummer: WO 2015/149100

(56) Entgegenhaltungen:
- DE-B- 1 210 686
- US-A- 1 956 828
- US-A- 2 008 169

## Beschreibung

Die Erfindung betrifft ein Federelement für eine Reibvorrichtung, insbesondere eine Kupplungsscheibe für eine Reibungskupplung, umfassend einen Federelementkörper, der ein erstes Federelementkörperteil und ein zweites Federelementkörperteil aufweist, die in axialer Richtung hintereinander angeordnet sind und bereichsweise aneinander anliegen, wobei jeder Federelementkörperteil in einer Umfangsrichtung nebeneinander angeordneten Aufnahmebereiche für Reibbeläge aufweist, sodass die Reibbeläge beidseitig des Federelementkörpers angeordnet und auf diesem befestigt werden können. Weiter betrifft die Erfindung eine Reibvorrichtung, insbesondere eine Kupplungsscheibe für eine Reibungskupplung, umfassend einen scheibenförmigen Grundkörper mit einem Trägerelement, wobei das Trägerelement einen äußeren Umfang aufweist, über den verteilt mehrere Reibgruppen angeordnet sind, wobei die Reibgruppen jeweils einen ersten Reibbelag und einen in axialer Richtung dahinter angeordneten zweiten Reibbelag aufweisen.

Für Kupplungsscheiben mit Reibbelägen sind im Stand der Technik bereits unzählige Ausführungsformen beschrieben worden, wie z.B. in der US 2008169 A1, US 1956828 A1 oder der DE 1210686 B1. So beschreibt z.B. die DE 29 20 095 A1 eine Reibbelagbefestigung, insbesondere für metallische bzw. metall-keramische Reibbeläge, von Kraftfahrzeug-Kupplungsscheiben, bestehend unter anderem aus in Fassungen gehaltenen Reibbelägen, welche paarweise einander gegenüberliegend an federnden Belagträgern angeordnet sind, wobei jeweils zwei gleiche Belagträger wechselseitig, mit ihren Wölbungen konvex einander zugekehrt, angeordnet sind, und jeder Reibbelag mit seiner Fassung über wenigstens zwei Befestigungsniete mit dem ihm zugeordneten Belagträger verbunden ist und sämtliche Befestigungsniete der beiden gegenüberliegenden Belagträger so über die vorhandene Fläche verteilt sind, dass gegenüber einer Symmetrielinie insbesondere der Belagträger eine symmetrische Verteilung vorliegt, ohne gegenseitige Überdeckung. Jeder Belagträger weist im Bereich der Projektion der Befestigungsniete des gegenüberliegenden Belagträgers entsprechende Durchbrechungen auf. Weiter weisen die Fassungen der Reibbeläge ebenfalls deckungsgleich zu den Belagträgern Durchbrechungen auf. Zwischen den beiden Belagträgern auf der Symmetrielinie ist wenigstens ein Abstandsniet zur Vorspannung der Belagträger angeordnet.

Die Anordnung der Reibbeläge auf federnden Belagträgern erfolgt vorwiegend deshalb, damit die metallischen bzw. metall-keramischen Reibbeläge beim Einrücken keine Schläge bzw. Stöße erfahren, wodurch diese Reibbeläge unter umständen frühzeitig Beschädigungen erleiden. Derartige metallische bzw. metall-keramische Reibbeläge sind nämlich im Vergleich zu anderen Reibbelägen, beispielsweise aus harzgebundenen Fasern, deutlich weniger elastisch. Andererseits bieten diese metallischen bzw. metall-keramischen Reibbeläge im Vergleich zu anderen Reibbelägen den Vorteil, dass damit höhere Drehmomente übertragen werden können. Mit der federnden Anordnung der Reibbeläge kann aber auch die Dosierbarkeit der Kupplung beim Einkuppeln verbessert werden.

Aus der US 5,857,551 A sind verschiedene Ausführungsformen einer Kupplungsscheibe bekannt. In einer ersten Ausführungsform sind die Reibbeläge auf drei Reibgruppen verteilt angeordnet, wobei auf den Belagträgern in Umfangsrichtung zwei Reibbeläge nebeneinander angeordnet sind, wie dies aus Fig. 2 der US 5,857,551 A ersichtlich ist. Es werden also bei dieser Ausführungsvariante der Kupplungsscheibe nach der US 5,857,551 A nicht jeweils zwei Reibbeläge auf jeweils gesonderten, flügelartigen Belagträgern angeordnet, wie dies in der voranstehend beschriebenen DE 29 20 095 A1 der Fall ist.

Die Reibbeläge sind bei dieser ersten Ausführungsvariante der Kupplungsscheibe nach der US 5,857,551 A einerseits durch Verstemmen mit den Belagträgern und andererseits durch Vernieten befestigt, wobei die eigentlichen Reibbeläge selbst auf Reibbelagträgern aufgesintert sind. Zum Verstemmen der Reibbelagträger mit den Belagträgern sind letztere auf drei Seiten umgebogen und weisen weiter eine umgebogene Lasche auf, sodass also die Reibbelagträger allseitig formschlüssig mit den Belagträgern verbunden sind.

Bei dieser Ausführungsvariante sind die Reibbeläge einerseits federnd, wie in der DE 29 20 095 A1 beschrieben, und andererseits starr über die Verstemmung befestigt.

Die US 5,857,551 A beschreibt noch eine weitere Ausführungsvariante einer Kupplungsscheibe, bei der analog zur DE 29 20 095 A1 jeweils zwei Reibbeläge auf jeweils gesonderten, flügelartigen Belagträgern angeordnet sind. Bei dieser Ausführungsvariante, die in Fig. 5 der US 5,857,551 A dargestellt ist, sind also die Belagträger nur mehr ca. halb so groß wie bei der ersten Ausführungsvariante. Verbunden damit beschreibt die US 5,857,551 A, dass sämtliche Reibbeläge federnd befestigt sind, wie dies bereits aus der DE 29 20 095 A1 bekannt ist. Es wird also von der starren Befestigung eines Teils der der Reibbeläge abgegangen. Der vorliegenden Erfindung liegt die Aufgabe zugrunde, eine Kupplungsscheibe der eingangs genannten Art bzw. generell eine Reibvorrichtung zu verbessern, insbesondere hinsichtlich ihres Reibverhaltens.

Diese Aufgabe wird einerseits durch das eingangs genannte Federelement und andererseits durch die eingangs genannte Reibvorrichtung gelöst. Dazu ist bei dem Federelement vorgesehen, dass das erste Federelementkörperteil und das zweite Federelementkörperteil zumindest annähernd ringförmig ausgebildet sind und dass pro Aufnahmebereich für die Reibbeläge eine erste Aufnahmelasche und eine zweite Aufnahmelasche ausgebildet sind, wobei die erste Aufnahmelasche in radialer Richtung unterhalb der zweiten Aufnahmelasche angeordnet ist, und wobei insbesondere die erste Aufnahmelasche und die zweite Aufnahmelasche eines jeden Aufnahmebereichs für die Reibbeläge des ersten Federelementkörperteils von dem ersten Federelementkörperteil und die erste Aufnahmelasche und die zweite Aufnahmelasche eines jeden Aufnahmebereichs für die Reibbeläge des zweiten Federelementkörperteils von dem zweiten Federelementkörperteil gebildet werden.

Bei der Reibvorrichtung ist zur Lösung der Aufgabe vorgesehen, dass die ersten und zweiten Reibbeläge mit einem Federelement entsprechend der Erfindung verbunden sind, gegebenenfalls unter Zwischenanordnung jeweils eines Reibbelagsträgers, und das Federelement mit dem Trägerelement verbunden ist, und wobei das Federelement zwischen den ersten und den zweiten Reibbelägen angeordnet ist, und, dass pro Aufnahmebereich für die Reibbeläge eine erste Aufnahmelasche und eine zweite Aufnahemelasche ausgebildet sind, wobei die erste Aufnamelasche in radialer Richtung unterhalb der zweiten Aufnahmelasche angeordnet ist. Mit dem Federelement wird eine drehzahlrobuste Ausführung einer Kupplungsscheibe bzw. einer Reibvorrichtung erreicht. Das Kippmoment, resultierend aus der Fliehkraft der Einzelsegmente, d.h. der Einzelreibbeläge, wird in der vorliegenden Konstruktion durch zwei getrennte Laschen abgestützt, wobei die untere Lasche auf Zug belastet wird und somit eine hohe Steifigkeit gegen das Kippmoment darstellt. Die Auslenkung der Federlaschen, d.h. der Aufnahmelaschen, ist unter Drehzahleinfluss damit im Vergleich zum Stand der Technik sehr gering. Die Kupplungsmodulation bei unterschiedlichen Drehzahlen kann nahezu gleich gestaltet werden. Durch die Einzelanfederung für jeden Reibbelag kann ein sehr homogenes Tragbild für die Reibbeläge erreicht werden. Durch die Anordnung von zwei Aufnahmelaschen pro Reibbelag kann eine bessere Einstellbarkeit der Steifigkeit der Reibvorrichtung erreicht werden.

Zur Reduzierung der Baumraumgröße in axialer Richtung und zur Reduzierung des Gewichts des Federelementes bzw. der Reibvorrichtung kann vorgesehen sein, dass die ersten Aufnahmelaschen des ersten Federelementkörperteils jeweils zumindest teilweise in einer Ausnehmung des ersten Federelementkörpers und/oder die ersten Aufnahmelaschen des zweiten Federelementkörperteils jeweils zumindest teilweise in einer Ausnehmung des zweiten Federelementkörpers angeordnet sind.

Weiter kann zur Abstimmung der axialen Steifigkeit für einzelne oder mehrere der Reibbeläge zumindest eine der folgenden Maßnahmen vorgesehen sein:
- zumindest eine der ersten Aufnahmelaschen in radialer Richtung kürzer ausgebildet ist, als die zweiten Aufnahmelaschen in radialer Richtung und/oder zumindest eine der zweiten Aufnahmelaschen in radialer Richtung kürzer ausgebildet ist, als die ersten Aufnahmelaschen in radialer Richtung, und/oder
- dass ein maximaler Abstand zwischen in axialer Richtung hintereinander angeordneten ersten Aufnahmelaschen von zumindest einem Paar erster Aufnahmelaschen kleiner oder größer ist als ein maximaler Abstand zwischen zwei in axialer Richtung hintereinander angeordneten zweiten Aufnahmelaschen, und/oder
- dass zumindest eine der Aufnahmelaschen von in der Umfangsrichtung des Federelementkörpers nebeneinander angeordneten Aufnahmelaschen in radialer Richtung kürzer ausgebildet ist, als die weiteren Aufnahmelaschen in der Umfangsrichtung, und/oder
- dass ein maximaler Abstand zwischen in axialer Richtung hintereinander angeordneten ersten Aufnahmelaschen von zumindest einem Paar erster Aufnahmelaschen größer ist als der maximale Abstand zwischen zwei ersten Aufnahmelaschen der in der Umfangsrichtung des Federelementkörpers nebeneinander angeordneten weiteren Paaren an ersten Aufnahmelaschen und/oder dass ein maximaler Abstand zwischen in axialer Richtung hintereinander angeordneten zweiten Aufnahmelaschen von zumindest einem Paar zweiter Aufnahmelaschen größer ist als der maximale Abstand zwischen zwei zweiten Aufnahmelaschen der in der Umfangsrichtung des Federelementkörpers nebeneinander angeordneten weiteren Paaren an zweiten Aufnahmelaschen, und/oder
- dass zumindest eine der Aufnahmelaschen eine kürzere maximale Laschenbreite in Richtung der Umfangsrichtung des Federelementkörpers aufweist, als die restlichen Aufnahmelaschen.

Neben der besseren Einstellbarkeit der axialen Steifigkeit der Reibbeläge ist dabei weiter von Vorteil, dass die Maßnahmen keine bzw. zumindest annähernd keine Beeinflussung der Torsions- und Biegesteifigkeit der Reibvorrichtung nach sich ziehen. Es ist damit weiter möglich zumindest für einzelne der Reibbeläge unterschiedliche Federwege einzustellen, sodass zumindest einzelne Reibbeläge bei unterschiedlichen Ausrückwegen mit dem Gegenreibelement bzw. der Gegenreibvorrichtung in Eingriff gelangen. Ebenso kann durch die Einzelaufnahme der Reibbeläge eine vordefinierte Schiefstellung gegenüber den Gegenreibpartnern gestaltet werden. Zudem ist es damit möglich, bei gleichbleibender Wandstärke des Federelementes bzw. der Federelementteile und gleichbleibender Laschenbreite die axiale Steifigkeit nahezu unabhängig von der Drehzahlrobustheit einzustellen.

Es kann weiter vorgesehen sein, dass die beiden Federelementkörperteile jeweils einstückig ausgebildet sind, wodurch dem gesamten Federelement eine zumindest annähernd über die gesamte Fläche gleichbleibende Grundsteifigkeit gegeben werden kann, sodass die Einstellung des Steifigkeitsverhaltens der Reibbeläge beim Einspuren, d.h. der Aufnahmelaschen für die Reibbeläge, einfacher und genauer erfolgen kann.

Es kann weiter vorgesehen sein, dass der erste Federelementkörperteil zumindest im Bereich der Aufnahmelaschen eine Wanddicke aufweist, und dass der zweite Federelementkörperteil zumindest im Bereich der Aufnahmelaschen eine Wanddicke aufweist, wobei die Wanddicke im Bereich zumindest einer der Aufnahmelaschen des ersten Federelementkörperteils im Vergleich zur Wanddicke im Bereich der Aufnahmelaschen des zweiten Federelementkörperteils kleiner ist.

Zum besseren Verständnis der Erfindung wird diese anhand der nachfolgenden Figuren näher erläutert.

Es zeigen jeweils in vereinfachter, schematischer Darstellung:
- Fig. 1: eine Ausführungsvariante einer Kupplungsscheibe in Ansicht in axialer Richtung;
- Fig. 2: einen ersten Federelementteil in Schrägansicht;
- Fig. 3: einen zweiten Federelementteil in Schrägansicht;
- Fig. 4: einen Ausschnitt aus einem Federelement in Schrägansicht;
- Fig. 5: den Ausschnitt aus dem Federelement nach Fig. 4 mit angeordneten Reibbelägen;
- Fig. 6: einen Ausschnitt aus einer Ausführungsvariante eines Federelementes in axialer Ansicht;
- Fig. 7: eine weiteren Ausführungsvariante eines Federelementes Seitenansicht geschnitten;
- Fig. 8: einen Ausschnitt aus einer anderen Ausführungsvariante eines Federelementes Seitenansicht geschnitten;
- Fig. 9: einen Ausschnitt aus einer anderen Ausführungsvariante eines Federelementes Seitenansicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

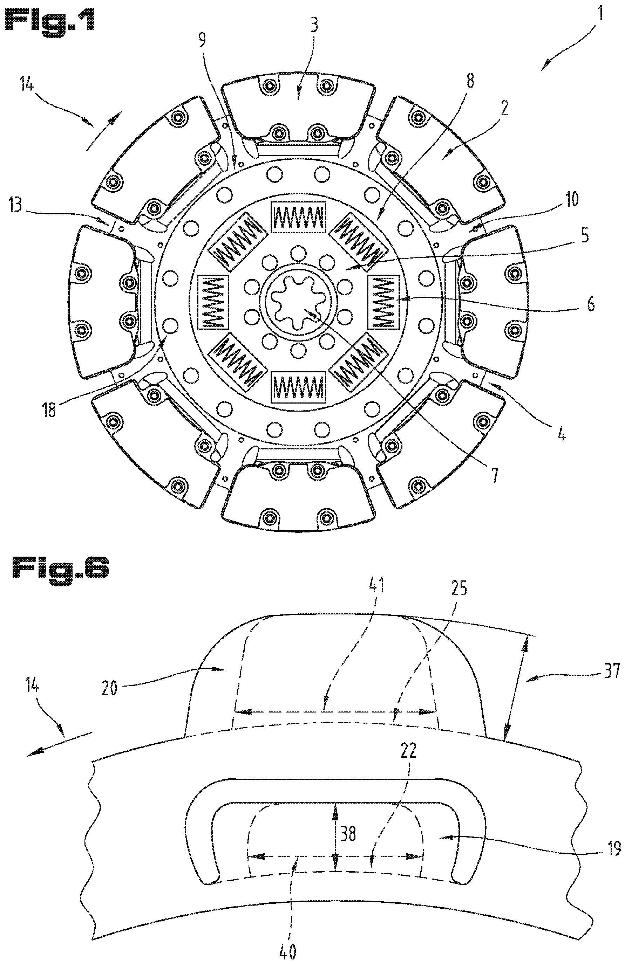

In Fig. 1 ist eine Reibvorrichtung in Form einer Kupplungsscheibe 1 für eine an sich aus dem Stand der Technik bekannte Reibungskupplung dargestellt.

Die Kupplungsscheibe 1 ist die bevorzugte Ausführungsform der Reibvorrichtung. Es sind aber im Rahmen der Erfindung auch andere Reibvorrichtungen möglich, wie z.B. Bremsen oder allgemein Vorspannelemente (in Art einer Tellerfeder).

Die Kupplungsscheibe 1 kann im Wesentlichen jenen entsprechen, die aus dem Stand der Technik bekannt sind. Mit im Wesentlichen ist dabei gemeint, dass - wie dies im folgenden noch näher erläutert wird - Unterschiede hinsichtlich des Aufbaus in Bezug auf die Anordnung von Reibbeläge 2, 3 und eines Federelementes 4 bestehen.

Demgemäß weist die Kupplungsscheibe 1 einen, insbesondere scheibenförmigen, Grundkörper 5 auf. Am bzw. im Grundkörper 5 sind mehrere Torsionsfedern 6 angeordnet. Die Anordnung der Torsionsfedern 6 ist jedoch nicht zwingend erforderlich, sodass also deren Anordnung in der Kupplungsscheibe 1 nur fakultativ ist. Zudem ist zentrisch eine Ausnehmung 7 zur Aufnahme einer nicht dargestellten Welle ausgebildet. Da dies prinzipiell aus dem Stand der Technik bekannt ist, sei zu Einzelheiten dazu auf die einschlägige Literatur verwiesen.

Der Grundkörper 5 umfasst ein scheibenförmiges Trägerelement 8. Das Trägerelement 8 ist zumindest im Bereich eines äußeren Umfangs 9 des Grundkörpers 5 angeordnet. Das Trägerelement 8 kann sich über die Fläche - in axialer Richtung betrachtet - den gesamten Grundkörper 5 erstrecken, also von der Ausnehmung 7 bis zum äußeren Umfang 9. Die Ausnehmung 7 kann also (auch) im Trägerelement 8 ausgebildet sein. In diesem Fall können die Torsionsfedern 6 (auch) in entsprechenden Aufnahmen im Trägerelement 8 angeordnet sein.

Es kann aber auch vorgesehen sein, dass das Trägerelement 8 ringförmig ausgebildet und nur im Bereich des Umfanges 9 angeordnet ist, sich radial also nicht bis in den Bereich der Ausnehmung 7 erstreckt.

Es besteht weiter die Möglichkeit, dass am Trägerelement 8 beidseitig, insbesondere scheibenförmige, Abdeckelemente (nicht dargestellt) zumindest bereichsweise angeordnet sind.

Vorzugsweise ist das Trägerelement 8 aus einem Metallblech, insbesondere einem Stahlblech, hergestellt.

Es ist bevorzugt, wenn das Trägerelement 8 einstückig ausgebildet ist, also nicht aus mehreren Teilen zusammengesetzt ist.

Am Trägerelement 8 angeordnet und mit diesem verbunden ist das Federelement 4 vorgesehen.

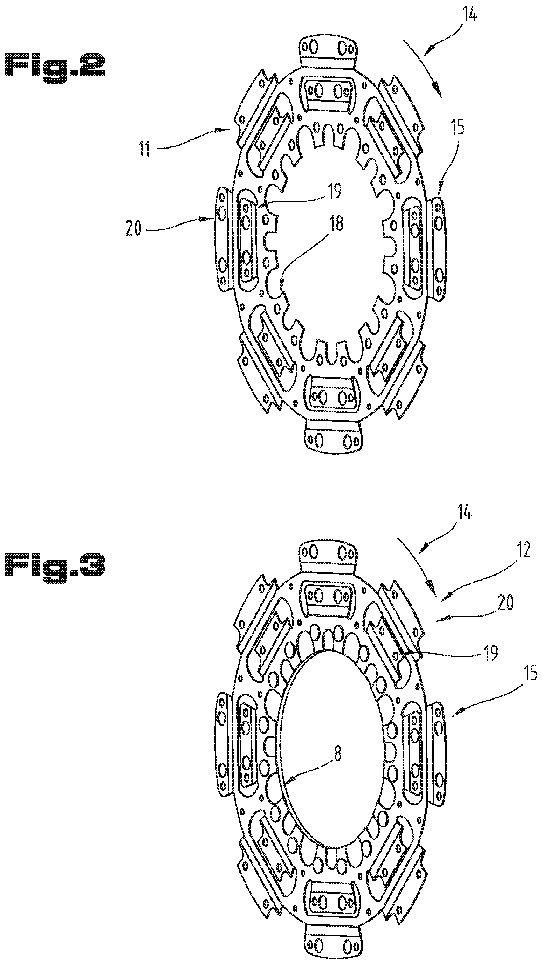

Das Federelement 4 weist einen Federelementkörper 10 auf. Dieser Federelementkörper 10 besteht aus einem ersten Federelementkörperteil 11, das in Fig. 2 dargestellt ist, und einem zweiten Federelementkörperteil 12, das in Fig. 3 dargestellt ist, bzw. weist das erste und das zweite Federelementkörperteil 11, 12 auf.

Wie insbesondere aus den beiden Fig. 2 und 3 ersichtlich ist, sind die beiden Federelementkörperteile 11, 12 zumindest annähernd ringförmig ausgebildet. Es ist dabei bevorzugt, wenn die beiden Federelementkörperteile 11, 12 jeweils einstückig, insbesondere als Stanzteile, ausgebildet sind. Gemäß einer nicht bevorzugten Ausführungsvariante des Federelementes 4 kann aber zumindest einer, beispielsweise können auch beide, dieser Federelementkörperteile 11, 12 mehrteilig ausgebildet sein, wobei die einzelnen Teile zur Ausbildung des jeweiligen Federelementkörperteils 11 bzw. 12 oder der beiden ringförmigen Federelementkörperteile 11, 12 miteinander verbunden sind.

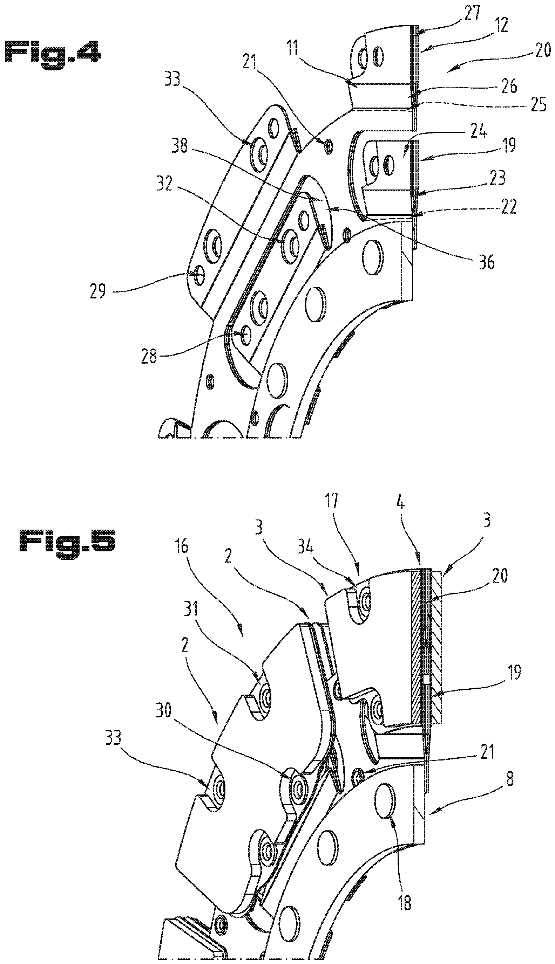

Über einen Federelementumfang 13 entlang einer Umfangsrichtung 14 verteilt sind mehrere nebeneinander angeordnete und insbesondere voneinander beabstandete Aufnahmebereiche 15 für die Reibbeläge 2, 3 vorgesehen bzw. ausgebildet. Die Reibbeläge 2, 3 sind dabei nicht ringartig, d.h. als geschlossener Ring wie die Federelementkörper 11, 12 ausgebildet, sondern sind in Form von diskreten Segmenten in der Umfangsrichtung 14 nebeneinander liegend und voneinander beabstandet angeordnet. Wie insbesondere aus Fig. 5 ersichtlich ist, sind die Reibbeläge 2, 3 jeweils beidseitig des Federelements 4 angeordnet. Dabei ist in axialer Richtung jeweils ein Reibbelag 2 hinter einem Reibbelag 3 angeordnet. In Umfangsrichtung der Kupplungsscheibe 1 sind die Reibbeläge jeweils alterierend auf den Federelementkörperteilen 11, 12 nebeneinander angeordnet. Somit bilden also jeweils ein Reibbelag 2 und ein Reibbelag 3 eine Reibgruppe 16 bzw. 17 wie dies aus Fig. 5 ersichtlich ist.

Es besteht aber auch die Möglichkeit, wenngleich dies nicht die bevorzugte Ausführungsvariante ist, dass jeweils einer der Reibbeläge 2 in axialer Richtung deckungsgleich mit jeweils einem von weiteren Reibbelägen 2 und jeweils einer der Reibbeläge 3 in axialer Richtung deckungsgleich mit jeweils einem von weiteren Reibbelägen 3 angeordnet ist, sodass also jeweils zwei Reibbeläge 2 und jeweils zwei Reibbeläge 3 eine Reibgruppe 16 bzw. 17 bilden.

In der dargestellten Ausführungsvariante der Kupplungsscheibe 1 sind pro Federelementkörperteil 11, 12 jeweils vier Aufnahmebereiche 15 für die Reibbeläge 2 und jeweils vier Aufnahmebereich 15 für die Reibbeläge 3 vorgesehen. Es kann aber auch eine dazu verschiedene Anzahl an Reibbelägen 2 und/oder Reibbeläge 3 vorgesehen werden, beispielsweise nur zwei oder drei, oder mehr als vier, beispielsweise fünf oder sechs, Reibbeläge 2 und/oder Reibbeläge 3.

Weiter sind in den Figuren nur zwei geometrisch verschieden ausgeführte Reibbeläge 2, 3 dargestellt. Auch dabei können wiederum mehr als zwei geometrisch unterschiedlich ausgebildete Reibbeläge 2, 3 vorgesehen werden, beispielsweise drei, vier, etc. Im Extremfall können nur die jeweils zwei Reibbeläge 2 oder 3 einer Reibgruppe 16 oder 17 geometrisch gleich ausgebildet sein, wobei selbst in diesem Fall eine geometrische Verschiedenheit der Reibbeläge 2, 3 einer Reibgruppe 16, 17 vorgesehen werden kann.

Die Federelementkörperteile 11, 12 sind mit dem Trägerelement 8 verbunden. Dazu sind bevorzugt sowohl in den Federelementkörperteile 11, 12 als auch in dem Trägerelement 8 Bohrungen vorgesehen, sodass die Federelementkörperteile 11, 12 über mehrere Nieten 18, die sich durch diese Bohrungen erstrecken, mit dem Trägerelement 8 verbunden ist.

Anstelle der Nieten 18 oder zusätzlich zu diesen kann die Fixierung, d.h. die Verbindung der Federelementkörperteile 11, 12 mit dem Trägerelement 8 auch kraftschlüssig und/oder stoffschlüssig und/oder formschlüssig erfolgen, beispielsweise indem der dem Trägerelement 8 zugewandte Endbereich der Federelementkörperteile 11, 12 zumindest annähernd um 90 ° umgebogen ist und in einer entsprechenden schlitzförmigen Aufnahme des Trägerelementes 8 eingesteckt ist.

Vorzugsweise sind die beiden Federelementkörperteile 11, 12 an einer Seite (in axialer Richtung betrachtet) des Trägerelementes 8 angeordnet, wie dies in den Figuren dargestellt ist. Es besteht aber auch die Möglichkeit, dass das Trägerelement 8 teilweise zwischen den beiden Federelementkörperteilen 11,12 angeordnet ist.

Es sei darauf hingewiesen, dass sich das Trägerelement 8 erstreckt sich bei der Kupplungsscheibe 1 nicht bis zu deren Außenumfang bzw. deren Außendurchmesser.

Jeder Federelementkörperteil 11, 12 weist nur auf jeweils einer Seite - in axialer Richtung betrachtet - die Reibbeläge 2, 3 auf, sodass die beiden Federelementkörperteile 11, 12 in axialer Richtung zwischen den Reibbelägen 2, 3 angeordnet sind, wie dies z.B. aus Fig. 5 ersichtlich ist. Dadurch liegen die beiden Federelementkörperteile 11, 12 in axialer Richtung vorzugsweise unmittelbar hintereinander, wobei die beiden Federelementkörperteile 11, 12 nur bereichsweise aneinander anliegen, wie dies z.B. aus Fig. 4 ersichtlich ist und im Folgenden noch näher erläutert wird.

Das Federelement 4 weist pro Aufnahmebereich 15 zumindest zwei, insbesondere ausschließlich zwei, Aufnahmelaschen, nämlich eine erste Aufnahmelasche 19 und eine zweite Aufnahmelasche 20, auf. Diese Aufnahmelaschen 19, 20 sind dabei auf die beiden Federelementkörperteile 11, 12 aufgeteilt. Bevorzugt sind pro Reibgruppe 16, 17 jeweils zwei erste Aufnahmelaschen 19 und jeweils zwei zweite Aufnahmelaschen 19 in axialer Richtung hintereinander angeordnet. Insbesondere sind diese Aufnahmelaschen 19, 20 einstückig mit dem Federelementkörper 11 oder 12 ausgebildet bzw. aus diesem gebildet. Es ist aber auch möglich, dass die Aufnahmelaschen 19, 20 jeweils eigene Bauteile bilden die mit den Federelementkörperteilen 11, 12 verbunden sind, beispielsweise über Nieten oder Schrauben und/oder stoffschlüssig, wie z.B. verschweißt oder verlötet oder verklebt, und/oder formschlüssig.

In axialer Richtung betrachtet sind jeweils zwei Aufnahmelaschen 19 und zwei Aufnahmelaschen 20 hintereinander angeordnet. Die hintereinander angeordneten Aufnahmelaschen können jeweils gleich groß sein, sie können aber auch eine unterschiedliche Größe aufweisen, wie dies im Folgenden noch näher aufgeführt wird.

Die ersten Aufnahmelaschen 19 sind in radialer Richtung betrachtet unterhalb der zweiten Aufnahmelaschen 20 angeordnet. Das Federelement 4 weist also radial innere Aufnahmelaschen 19 und radial äußere Aufnahmelaschen 20 für Reibbeläge 2, 3 auf.

Die beiden Federelementkörperteile 11, 12 sind vorzugsweise miteinander verbunden, d.h. dass die die Federelementkörperteile 11, 12 nicht nur im Bereich des Trägerelementes 8 über die Nieten 18 mit dem Trägerelement 8 und damit auch miteinander verbunden sind, sondern dass zusätzliche Nieten 21 vorgesehen sind, über die die beiden Federelementkörperteile 11, 12 miteinander verbunden sind. Diese Nieten 21 sind dabei vorzugsweise nicht im Bereich der Aufnahmelaschen 19, 20 angeordnet, sondern in der Umfangsrichtung 14 betrachtet neben den Aufnahmelaschen 19, 20, wie dies insbesondere aus den Fig. 4 und 5 ersichtlich ist.

Anstelle der Verbindung der beiden Federelementkörperteile 11, 12 über die Nieten 21 oder zusätzlich dazu kann die Verbindung der Federelementkörperteile 11, 12 auch stoffschlüssig, insbesondere durch Schweißen, oder durch Kleben, und/oder formschlüssig, z.B. durch Falzen, erfolgen.

Wie insbesondere aus den Fig. 4 und ersichtlich ist, liegen die beiden Federelementkörperteile 11, 12 nur bereichsweise aneinander an. Im Bereich der Aufnahmelaschen 11, 12 sind sie zumindest teilweise beabstandet zueinander ausgebildet, wodurch die Federwirkung der Aufnahmelaschen 11, 12 bei Druckbelastung entsteht. Zur Ausbildung dieser Beabstandung sind die Aufnahmelaschen 19 und 20 des ersten Federelementkörperteils 11 in axialer Richtung nach vorne aus der Ebene des ersten Federelementkörperteils 11 heraus aufgebogen und die Aufnahmelaschen 19 und 20 des zweiten Federelementkörperteils 12 in axialer Richtung nach hinten aus der Ebene des zweiten Federelementkörperteils 11 heraus aufgebogen. Somit weisen die Aufnahmelaschen 19 ausgehend von einer Basis 22 (in Fig. 4 strichliert eingezeichnet) einen ersten schrägen Laschenteil 23 (schräg in Bezug auf die Ebene des ersten Federelementkörperteils 11 bzw. zweiten Federelementkörperteils 12 senkrecht auf die Axialrichtung der Kupplungsscheibe 1) und einen daran anschließenden zweiten Laschenteil 24, der zumindest annähernd parallel zur Ebene des ersten Federelementkörperteils 11 bzw. zweiten Federelementkörperteils 12 senkrecht auf die Axialrichtung der Kupplungsscheibe 1 verläuft. Analog dazu weisen die zweiten Aufnahmelaschen 20 ausgehend von einer Basis 25 (in Fig. 4 strichliert eingezeichnet) einen ersten schrägen Laschenteil 26 (schräg in Bezug auf die Ebene des ersten Federelementkörperteils 11 bzw. zweiten Federelementkörperteils 12 senkrecht auf die Axialrichtung der Kupplungsscheibe 1) und einen daran anschließenden zweiten Laschenteil 27, der zumindest annähernd parallel zur Ebene des ersten Federelementkörperteils 11 bzw. zweiten Federelementkörperteils 12 senkrecht auf die Axialrichtung der Kupplungsscheibe 1 verläuft.

Es besteht im Rahmen der Erfindung die Möglichkeit, dass pro Aufnahmelaschen 19, 20 mehr als ein schräger Laschenteil 23, 26 vorhanden ist, beispielsweise zwei oder drei, etc., wobei in diesem Fall diese eine unterschiedliche Neigung aufweisen können, als die ersten schrägen Laschenteile 23, 26.

Weiter besteht die Möglichkeit, dass keine parallelen Laschenteile 24, 27 an den Aufnahmelaschen 19, 20 ausgebildet sind, sondern nur ein oder mehrere schräge Laschenteile 23, 26, die wiederum eine unterschiedliche Neigung gegen die voranstehend genannte Ebene aufweisen können. Die Anordnung bzw. Ausbildung der parallelen zweiten Laschenteile 24, 27 hat jedoch den Vorteil der besseren Anbindbarkeit der Reibbeläge 2, 3 an die Aufnahmelaschen 19, 20.

Bei der in den Figuren dargestellten Ausführungsvariante des Federelementes 4 sind die Basis 22 und die Basis 25 in radialer Richtung jeweils unterhalb der genannten Laschenteile 23 bzw. 27 ausgebildet. Es besteht aber auch die Möglichkeit, dass beispielsweise die Basis 22 oberhalb des ersten schrägen Laschenteils 23 angeordnet ist, sodass also die Aufnahmelaschen 19 umgekehrt als in Fig. 4 dargestellt angeordnet sind, sich also nicht in Richtung radial nach außen sondern von der Basis 22 in Richtung radial nach innen erstrecken. Dabei kann auch vorgesehen sein, dass nicht sämtliche Aufnahmelaschen 19 umgekehrt ausgebildet sind, sondern nur einige, z.B. in der Umfangsrichtung 14 jede zweite. Bei dieser Ausbildung liegen also die Basis 22 und die Basis 25 zumindest einzelner erster Aufnahmelaschen 19 und zweiter Aufnahmelaschen 20 in radialer Richtung betrachtet nebeneinander, sodass zumindest einzelne der Aufnahmelaschen 19, 20 schmetterlingsartig ausgebildet sind.

Es kann aber auch vorgesehen sein, dass die Richtung zumindest einzelner der radial äußeren zweiten Aufnahmelaschen 20 umgekehrt wird, dass sich zumindest einzelne, beispielsweise in der Umfangsrichtung 14 jede zweite, nicht wie dargestellt von der Basis 25 radial nach außen sondern radial nach innen erstreckt.

Zur Befestigung der Reibbeläge 2, 3 an den Aufnahmelaschen 19, 20 weisen letzter Bohrungen 28, 29 bzw. Ausnehmungen auf, sodass die Reibbeläge 2, 3 mit Nieten 30, 31 angenietet werden können. Dabei ist vorzugsweise vorgesehen, dass jede zweite der Bohrungen 28, 29 in einem der beiden Federelementkörperteile 11, 12 mit einer Absetzung 32, 33 bzw. Senkung ausgebildet sind. Es wird damit erreicht, dass, nachdem in Axialrichtung der Kupplungsscheibe 1 zur Ausbildung der Reibgruppen 16, 17 jeweils zwei Reibbeläge 2, 3 hintereinander angeordnet sind, die Nieten 30, 31 eines Reibbelages 2, 3, d.h. die Nietenköpfe, bei der Befestigung des zweiten Reibbelages 2, 3 nicht stören. Die Nietenköpfe werden in diesen Absetzungen 32, 33 aufgenommen und ragen nicht über die Oberfläche der jeweiligen Aufnahmelasche 19, 20 hinaus.

Prinzipiell können die Reibbeläge 2, 3 aber auch anders mit den Aufnahmelaschen 19, 20 verbunden werden, beispielsweise durch Verschrauben, Kleben oder Schweißen, wobei in den beiden letztgenannten Fällen die Bohrungen 28, 29 in den Aufnahmelaschen 19, 20 nicht zwingend erforderlich sind.

Vorzugsweise weisen die Reibbeläge 2, 3 jeweils einen Reibbelagsträger 33, 34 auf, auf dem sie befestigt sind, insbesondere aufgesintert sind oder mit dem sie verklebt oder verlötet sind, und mit dem sie an den Aufnahmelaschen 19, 20 befestigt werden, wie dies z.B. aus Fig. 5 ersichtlich ist. Die Reibbeläge 2, 3, können aber auch direkt mit den Aufnahmelaschen 19, 20 verbunden werden, beispielsweise verklebt werden, wenngleich diese nicht die bevorzugte Ausführungsvariante ist.

Weiter weisen die Reibbeläge 2, 3 ein Höhe auf (in Axialrichtung der Kupplungsscheibe 1 betrachtet) die größer ist, als eine Höhe der Nietenköpfe der Nieten 30, 31, falls die Reibbeläge 2, 3 angenietet werden.

Falls die Reibbeläge 2, 3 mit Aufnahmelaschen 19, 20 vernietet werden, besteht die Möglichkeit, dass die Reibbelagsträger 33, 34 im Bereich des Nietkopfes eine Absetzung aufweist, wobei eine Innenabmessung der Absetzung größer ist als die Außenabmessung des Nietkopfes, sodass der Nietkopf zumindest teilweise in dieser Absetzung aufgenommen ist.

Wie bereits ausgeführt, sind die beiden Federelementkörperteile 11, 12 in axialer Richtung der Kupplungsscheibe 1 betrachtet zwischen den Reibbelägen 2, 3 angeordnet, also vorzugsweise zwischen den Reibbelagsträgern 34, 35. Somit kann unter anderem über die Größe der Beabstandung der Aufnahmelaschen 19, 20 auch die Federung bzw. der Federweg eingestellt werden. Sämtliche Reibbeläge 2, 3 der Kupplungsscheibe 1 sind vorzugsweise federnd gehalten.

Die ersten Reibbeläge 2 und die zweiten Reibbeläge 3 sind vorzugsweise aus einem hierfür üblichen metallischen oder metall-keramischen Sinterwerkstoff hergestellt. Es besteht aber auch die Möglichkeit, diese aus anderen Werkstoffen, wie z.B. harzgebundenen Faserwerkstoffen herzustellen. Diese Arten an Reibbelägen 2, 3 sind in der einschlägigen Literatur ausführlich beschrieben, sodass an dieser Stelle darauf verwiesen sei.

Hinsichtlich der verwendbaren Kleber zur Ausbildung der Klebestellen sei ebenfalls auf die einschlägige Literatur verwiesen, da die Verklebung von Reibbelägen an sich bekannt ist.

Die Reibbelagsträger 34, 35 können aus einem eisenbasierten Werkstoff bestehen, beispielsweise aus einem Stahl, insbesondere einem Baustahl oder einem Vergütungsstahl. Ebenso sind andere geeignete Werkstoffe verwendbar, z.B. ein Lötblech, insbesondere aus einem eisenbasierten Werkstoff, beispielsweise aus einem Stahl, insbesondere einem Baustahl oder einem Vergütungsstahl.

Die Federelementkörperteile 11, 12 können aus einem, insbesondere warmfesten, Federstahl bestehen.

In Folgenden werden weitere und gegebenenfalls für sich eigenständige Ausführungsformen des Federelementes 4 bzw. der Reibvorrichtung, insbesondere der Kupplungsscheibe 1, beschrieben, wobei wiederum für gleiche Teile gleiche Bezugszeichen bzw. Bauteilbezeichnungen wie im Voranstehenden verwendet werden. Um unnötige Wiederholungen zu vermeiden, wird auf die voranstehende detaillierte Beschreibung dazu hingewiesen bzw. Bezug genommen.

Nach einer bevorzugten Ausführungsvariante des Federelementes 4 kann vorgesehen werden, das die radial inneren ersten Aufnahmelaschen 19 in einer Ausnehmung 36 der jeweiligen Federelementkörperteile 11, 12 angeordnet sind, wie dies z.B. aus Fig. 4 ersichtlich ist. Diese Ausnehmungen 36 sind dabei so groß, dass die frei Beweglichkeit der ersten Aufnahmelaschen 19 nicht behindert wird. Form und Geometrie der Ausnehmungen 36 richtet sich dabei insbesondere nach der Form und der Geometrie der ersten Aufnahmelaschen 19.

Wie bereits voranstehend ausgeführt bietet das Federelement 4 die Möglichkeit, nachdem jeder Reibbelag 2, 3 auf einer radial inneren ersten Aufnahmelasche 19 und einer radial äußeren zweiten Aufnahmelasche 20 befestigt ist, jeden Reibbelag 2, 3 hinsichtlich seiner Steifigkeit in axialer Richtung beim Einrücken der Reibvorrichtung, insbesondere der Kupplungsscheibe 1, individuell einzustellen. Insbesondere kann das Steifigkeitsverhalten der Reibbeläge 2, 3 durch die Größe der Aufnahmelaschen 19, 20 und/oder den Aufstellwinkel der Aufnahmelaschen 19, 20 und/oder die Wandstärke der Aufnahmelaschen 19, 20 eingestellt werden.

Demzufolge kann nach einer weiteren Ausführungsvariante des Federelementes 4 vorgesehen sein, dass die radial innere erste Aufnahmelasche 19 oder die in radialer Richtung über der ersten Aufnahmelaschen 19 angeordnete radial äußere zweite Aufnahmelasche 20 in radialer Richtung kürzer ausgebildet ist, als die jeweils andere Aufnahmelasche 20, 19 für einen Reibbelag 2, 3. Es ist dazu in Fig. 6 beispielsweise die radial äußere zweite Aufnahmelasche 20 mit einer maximalen Laschenhöhe 37 ausgebildet, die größer ist als eine maximale Laschenhöhe 38 der radial inneren ersten Aufnahmelasche 19. Die maximale Laschenhöhe 37, 38 ist dabei definiert als der jeweilige Abstand des radial äußersten Punktes der jeweiligen Aufnahmelasche 19, 20 von der jeweiligen Basis 22 oder 25, wobei die jeweilige Basis 22 oder 25 der Aufnahmelaschen 19 bzw. 20 im Regelfall dort verläuft, wo der Übergang zwischen den aneinander anliegenden und den beabstandeten Teilen der Aufnahmelaschen 19, 20 bzw. der Federelementkörperteile 11, 12 ausgebildet ist, wie dies z.B. aus Fig. 4 ersichtlich ist.

Es kann aber auch die umgekehrte Ausbildung vorgesehen werden, dass also die radial inneren ersten Aufnahmelaschen 19 in radialer Richtung eine größere maximale Laschenhöhe 38 aufweisen also die zweiten radial äußeren Aufnahmelaschen 20. Ebenso kann vorgesehen werden, dass in einer Mischvariante einige, beispielsweise in Umfangsrichtung 14 jede zweite, der radial inneren ersten Aufnahmelaschen 19 eine höhere Laschenhöhe 38 aufweisen als die radial äußeren zweiten Aufnahmelaschen 20 und/oder dass einige, beispielsweise in Umfangsrichtung 14 jede zweite, der radial äußeren zweiten Aufnahmelaschen 20 eine höhere Laschenhöhe 37 aufweisen als die radial inneren ersten Aufnahmelaschen 19. Des weiteren kann vorgesehen sein, dass die maximale Laschenhöhe 37 zumindest einzelner der ersten radial inneren Aufnahmelaschen 19 und/oder die maximale Laschenhöhe 38 zumindest einzelner der zweiten radial äußeren Aufnahmelaschen 20 jeweils zueinander unterschiedlich sind, d.h. dass nicht sämtliche ersten radial inneren Aufnahmelaschen 19 die gleiche maximale Laschenhöhe 37 und/oder dass nicht sämtliche zweiten radial äußeren Aufnahmelaschen 20 die gleiche maximale Laschenhöhe 38 aufweisen.

Generell kann also zumindest einer der Aufnahmelaschen 19, 20 des Federelementes 4 in radialer Richtung eine kleinere oder größere maximale Laschenhöhe 37, 38 aufweisen, als der Rest der Aufnahmelaschen 19, 20 des Federelementes 4.

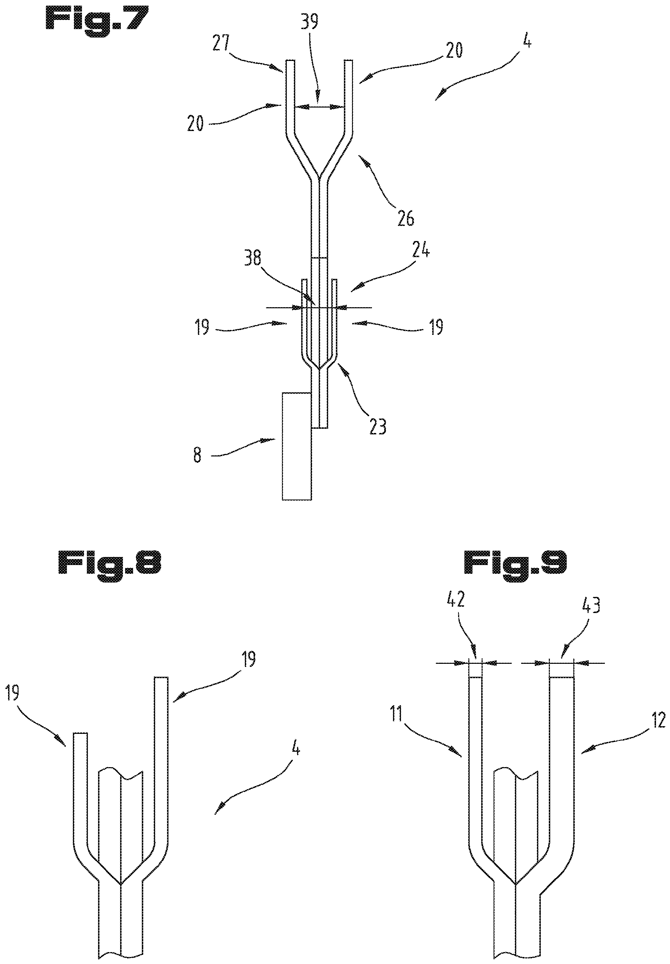

Nach einer weiteren Ausführungsvariante kann alternativ zu vorhergehender Ausführungsvariante oder zusätzlich dazu vorgesehen sein, dass ein maximaler Laschenabstand 38 in axialer Richtung zwischen zwei Aufnahmelaschen 19 oder 20 einer Reibgruppe 16, 17 größer ist als der maximale Laschenabstand 39 zwischen zwei Aufnahmelaschen 20 oder 19 derselben Reibgruppe 16, 17, d.h. der in radialer Richtung unter oder oberhalb dieser Aufnahmelaschen 19, 20 mit dem maximalen Laschenabstand 38 angeordneten Aufnahmelaschen 19, 20 mit dem Laschenabstand 37. In Fig. 7 ist dazu eine Ausführungsform dieser Ausführungsvariante des Federelementes 4 ausschnittsweise dargestellt. Dabei ist der maximale Laschenabstand 39 zwischen zwei zweiten radial äußeren Aufnahmelaschen 20 größer als der Laschenabstand 38 zwischen zwei ersten radial inneren Aufnahmelaschen 19 der Reibgruppe 16 (in Fig. 5 dargestellt).

Der maximale Laschenabstand 38, 39 ist dabei als der größte Abstand zwischen zwei Aufnahmelaschen 19 bzw. 20, gemessen zwischen den aufeinander zuweisenden Oberflächen.

Auch bei dieser Ausführungsvariante des Federelementes 4 sind unterschiedliche Ausbildungen möglich. So können jeweils alle oder einige, beispielsweise in der Umfangsrichtung 14 jedes zweite, Paar an ersten radial inneren Aufnahmelaschen 19 einen kleineren Laschenabstand 38 aufweisen als die entsprechenden zweiten radial äußeren Aufnahmelaschen 20. Ebenso ist es möglich, dass jeweils alle oder einige, beispielsweise in der Umfangsrichtung 14 jedes zweite, Paar an zweiten radial äußeren Aufnahmelaschen 20 einen kleineren Laschenabstand 39 aufweisen als die entsprechenden ersten radial inneren Aufnahmelaschen 19. Ebenso sind Ausführungsvarianten möglich, bei denen sowohl einige der ersten radial inneren Aufnahmelaschen 19, beispielsweise in der Umfangsrichtung 14 jedes zweite Paar, und einige der zweiten radial äußeren Aufnahmelaschen, beispielsweise in der Umfangsrichtung 14 jedes zweite Paar, einen kleineren Laschenabstand 38 bzw. 39 aufweisen, als die entsprechenden Aufnahmelaschen 19, 20 der jeweils zugehörigen Aufnahmelaschen 19, 20 einer Reibgruppe 16 bzw. 17. Dabei ist auch einer Versetzung in der Umfangsrichtung 14 möglich, d.h. dass ein Paar an radial inneren ersten Aufnahmelaschen 19 den kleineren Laschenabstand 38 aufweisen, darauf in Umfangsrichtung 14 folgend ein Paar an zweiten radial äußeren Aufnahmelaschen 20, darauf in Umfangsrichtung 14 folgend ein Paar an ersten radial inneren Aufnahmelaschen 19, usw.

Es kann bei diesen Ausführungsvarianten auch von Vorteil sein, wenn die Aufnahmelaschen den in Fig. 7 dargestellten parallelen zweiten Laschenteil 24 bzw. 27 nicht aufweisen sondern nur den ersten schrägen Laschenteil 23 bzw. 26 und der Schrägungswinkel dabei so ausgebildet ist, dass die Reibbelagsträger 34, 35 oder die Reibbeläge 2, 3 flächig auf den Aufnahmelaschen 19, 20 aufliegen. Für diesen Zweck kann aber beispielsweise auch der zweite Laschenteil 24 bzw. 27 schräg verlaufend ausgebildet sein, mit einem Schrägungswinkel der vom Schrägungswinkel der ersten Laschenteile 23 bzw. 26 unterschiedlich ist.

Bezüglich der ersten und zweiten Laschenteile 23, 26 und 24, 27 sei auf voranstehende Beschreibung verwiesen.

Alternativ oder zusätzlich zu dieser Ausführungsvariante bzw. zu diesen Ausführungsvarianten des Federelementes 4 kann gemäß einer weiteren Ausführungsvariante vorgesehen sein, dass zumindest eine der ersten radial innere Aufnahmelaschen 19 von in der Umfangsrichtung 14 des Federelementkörpers 11 oder 12 nebeneinander angeordneten ersten radial inneren Aufnahmelaschen 19 in radialer Richtung kürzer ausgebildet ist, als die ersten radial inneren Aufnahmelaschen 19 derselben Reibgruppe 16 oder 17.

Ein Beispiel für diese Ausführungsvariante ist in Fig. 8 dargestellt. Dabei ist eine erste radial innere Aufnahmelasche 19 (in Fig. 8 links dargestellt) in radialer Richtung kürzer ausgeführt als eine zweite erste radial innere Aufnahmelasche 19 (in Fig. 8 rechts dargestellt), die der ersten radial inneren Aufnahmelasche 19 in axialer Richtung gegenüberliegt.

Möglich ist aber auch, dass eine zweite radial äußere Aufnahmelasche 20 (in Fig. 8 nicht dargestellt) in radialer Richtung kürzer ausgeführt als eine zweite zweite radial äußere Aufnahmelasche 20 (in Fig. 8 nicht dargestellt), die der ersten radial inneren zweiten Aufnahmelasche 19 in axialer Richtung gegenüberliegt. Weiter ist es möglich, dass innerhalb einer Reibgruppe 16, 17 sowohl eine erste radial innere als auch eine zweite radial äußere Aufnahmelaschen 19, 20 in radialer Richtung kürzer ausgeführt sind, als die entsprechenden, diesen Aufnahmelaschen 19, 20 in axialer Richtung gegenüberliegenden Aufnahmelaschen 19, 20. Zudem ist es möglich, dass von zwei in der Umfangsrichtung 14 nebeneinander angeordneten Aufnahmelaschen 19 und/oder Aufnahmelaschen 20 eine in radialer Richtung kürzer ausgeführt ist, als die jeweils andere erste radial innere Aufnahmelasche 19 und/oder zweite radial äußere Aufnahmelasche 20. Zudem ist es möglich, dass in Umfangsrichtung 14 ein erste radial innere Aufnahmelasche 19, daran anschließend eine zweite radial äußere Aufnahmelasche 20, daran anschließend wieder eine erste radial innere Aufnahmelasche 19, usw. eines Federelementkörperteils 11 und/oder Federelementkörperteils 12 in radialer Richtung kürzer ausgeführt ist.

Es kann nach einer weiteren Ausführungsvariante des Federelementes 4 (wiederum alternativ oder zusätzlich zu den voranstehenden Ausführungsvarianten) vorgesehen sein, dass zumindest eine der ersten radial inneren Aufnahmelaschen 19 in Richtung der Umfangsrichtung 14 des Federelementkörpers 10 eine kürzere maximale Laschenbreite 40 aufweist, als die anderen Aufnahmelaschen 19, 20, wie dies in Fig. 6 strichliert angedeutet ist. Es kann aber auch vorgesehen sein, dass zumindest eine der zweiten radial äußeren Aufnahmelaschen 20 in Richtung der Umfangsrichtung 14 des Federelementkörpers 10 eine kürzere maximale Laschenbreite 41 aufweist, als die anderen Aufnahmelaschen 19, 20.

Wiederum sind dabei mehrere Ausführungsformen möglich. Beispielsweise kann in der Umfangsrichtung 14 jede zweite erste radial innere Aufnahmelasche 19 eine kürzere Laschenbreite 40 und/oder kann in der Umfangsrichtung 14 jede zweite zweite radial äußere Aufnahmelasche 20 eine kürzere Laschenbreite 41 aufweisen. Auch alternierend angeordnete kürzere erste und zweite Aufnahmelaschen 19, 20, wie voranstehend beschrieben, sind möglich.

Nach eine anderen Ausführungsvariante des Federelementes 4 kann vorgesehen sein (wiederum alternativ oder zusätzlich zu den voranstehenden Ausführungsvarianten), dass der erste Federelementkörperteil 11 zumindest im Bereich zumindest einer der Aufnahmelaschen 19 und/oder Aufnahmelaschen 20 (vorzugsweise der gesamte Federelementkörperteil 11) eine Wanddicke 42 aufweist, die zu einer Wanddicke 43 des zweiten Federelementkörperteil 12 kleiner ist, wie dies in Fig. 9 dargestellt ist.

Die Ausführungsbeispiele zeigen mögliche Ausführungsvarianten des Federelementes 4 bzw. der Reibvorrichtung, insbesondere der Kupplungsscheibe 1, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Federelementes 4 bzw. der Reibvorrichtung, insbesondere der Kupplungsscheibe 1, diese bzw. deren Bestandteile teilweise unmaßstäblich und/oder vergrößert und/oder verkleinert dargestellt wurden.

und wobei jeweils die ersten Aufnahmelaschen (19) und die zweiten Aufnahmelaschen (20) eines Aufnahmebereichs (15) in axialer Richtung hintereinander angeordnet und teilweise beabstandet voneinander sind.

**Bezugszeichenaufstellung**

| | | | |
|---|---|---|---|
| 1 | Kupplungsscheibe | 31 | Niet |
| 2 | Reibbelag | 32 | Absetzung |
| 3 | Reibbelag | 33 | Absetzung |
| 4 | Federelement | 34 | Reibbelagsträger |
| 5 | Grundkörper | 35 | Reibbelagsträger |
| 6 | Torsionsfeder | 36 | Ausnehmung |
| 7 | Ausnehmung | 37 | Laschenhöhe |
| 8 | Trägerelement | 38 | Laschenabstand |
| 9 | Umfang | 39 | Laschenabstand |
| 10 | Federelementkörper | 40 | Laschenbreite |
| 11 | Federelementkörperteil | 41 | Laschenbreite |
| 12 | Federelementkörperteil | 42 | Wanddicke |
| 13 | Federelementumfang | 43 | Wanddicke |
| 14 | Umfangsrichtung | | |
| 15 | Aufnahmebereich | | |
| 16 | Reibgruppe | | |
| 17 | Reibgruppe | | |
| 18 | Niet | | |
| 19 | Aufnahmelasche | | |
| 20 | Aufnahmelasche | | |
| 21 | Niet | | |
| 22 | Basis | | |
| 23 | Laschenteil | | |
| 24 | Laschenteil | | |
| 25 | Basis | | |
| 26 | Laschenteil | | |
| 27 | Laschenteil | | |
| 28 | Bohrung | | |
| 29 | Bohrung | | |
| 30 | Niet | | |

## Patentansprüche

1. Federelement (4) für eine Reibvorrichtung, insbesondere eine Kupplungsscheibe (1) für eine Reibungskupplung, umfassend einen Federelementkörper (10), der ein erstes Federelementkörperteil (11) und ein zweites Federelementkörperteil (12) aufweist, die in axialer Richtung hintereinander angeordnet sind und bereichsweise aneinander anliegen, wobei jeder Federelementkörperteil (11, 12) in einer Umfangsrichtung (13) nebeneinander angeordnete Aufnahmebereiche (15) für Reibbeläge (2, 3) aufweist, sodass die Reibbeläge (2, 3) beidseitig des Federelementkörpers (10) angeordnet und auf diesem befestigt werden können, wobei das erste Federelementkörperteil (11) und das zweite Federelementkörperteil (12) zumindest annähernd ringförmig ausgebildet sind, **dadurch gekennzeichnet, dass** pro Aufnahmebereich (15) für die Reibbeläge (2, 3) eine erste Aufnahmelasche (19) und eine zweite Aufhahmelasche (20) ausgebildet sind, wobei die erste Aufnahmelasche (19) in radialer Richtung unterhalb der zweiten Aufnahmelasche (20) angeordnet ist, wobei zur Befestigung jedes Reibbelags (2, 3) auf einer radial inneren ersten Aufnahmelasche (19) und einer radial äußeren zweiten Aufnahmelasche (20) die beiden Federelementkörperteile (11, 12) im Bereich der Aufnahmelaschen (19, 20) zumindest teilweise beabstandet zueinander ausgebildet sind, wobei zur Ausbildung dieser Beabstandung die Aufnahmelaschen (19, 20) des ersten Federelementkörperteils (11) in axialer Richtung nach vorne aus der Ebene des ersten Federelementkörperteils (11) heraus aufgebogen und die Aufnahmelaschen (19, 20) des zweiten Federelementkörperteils (12) in axialer Richtung nach hinten aus der Ebene des zweiten Federelementkörperteils (11) heraus aufgebogen sind und dazu die radial inneren ersten Aufnahmelaschen (19) ausgehend von einer Basis (22) einen ersten, in Bezug auf die Ebene des ersten Federelementkörperteils (11) bzw. zweiten Federelementkörperteils (12) senkrecht auf die Axialrichtung des Federelements (4) schrägen Laschenteil (23) und einen daran anschließenden zweiten Laschenteil (24), der zumindest annähernd parallel zur Ebene des ersten Federelementkörperteils (11) bzw. zweiten Federelementkörperteils (12) senkrecht auf die Axialrichtung des Federelements (4) verläuft, aufweisen, und analog dazu die radial äußeren zweiten Aufnahmelaschen (20) ausgehend von einer Basis (25) einen ersten, in Bezug auf die Ebene des ersten Federelementkörperteils (11) bzw. zweiten Federelementkörperteils (12) senkrecht auf die Axialrichtung des Federelements (4) schrägen Laschenteil (26) und einen daran anschließenden zweiten Laschenteil (27), der zumindest annähernd parallel zur Ebene des ersten Federelementkörperteils (11) bzw. zweiten Federelementkörperteils (12) senkrecht auf die Axialrichtung des Federelements (4) verläuft, aufweisen, und wobei insbesondere die erste Aufnahmelasche (19) und die zweite Aufnahmelasche (20) eines jeden Aufnahmebereichs (15) für die Reibbeläge (2, 3) des ersten Federelementkörperteils (11) von dem ersten Federelementkörperteil (11) und die erste Aufnahmelasche (19) und die zweite Aufnahmelasche (20) eines jeden Aufnahmebereichs (15) für die Reibbeläge (2, 3) des zweiten Federelementkörperteils (12) von dem zweiten Federelementkörperteil (12) gebildet werden.

2. Federelement (4) nach Anspruch 1, **dadurch gekennzeichnet, dass** die ersten Aufnahmelaschen (19) des ersten Federelementkörperteils (11) jeweils zumindest teilweise in einer Ausnehmung (36) des ersten Federelementkörpers (11) und/oder die ersten Aufnahmelaschen (19) des zweiten Federelementkörperteils (12) jeweils zumindest teilweise in einer Ausnehmung (36) des zweiten Federelementkörpers (12) angeordnet sind.

3. Federelement (4) nach Anspruch 1 oder 2, **dadurch gekennzeichnet, dass** zumindest eine der ersten Aufnahmelaschen (19) in radialer Richtung kürzer ausgebildet ist, als die zweiten Aufnahmelaschen (20) in radialer Richtung und/oder zumindest eine der zweiten Aufnahmelaschen (20) in radialer Richtung kürzer ausgebildet ist, als die ersten Aufhahmelaschen (19) in radialer Richtung.

4. Federelement (4) nach einem der Ansprüche 1 bis 3, **dadurch gekennzeichnet, dass** ein maximaler Abstand (38) zwischen in axialer Richtung hintereinander angeordneten ersten Aufnahmelaschen (19) von zumindest einem Paar erster Aufnahmelaschen (19) kleiner oder größer ist als ein maximaler Abstand (39) zwischen zwei in axialer Richtung hintereinander angeordneten zweiten Aufnahmelaschen (20).

5. Federelement (4) nach einem der Ansprüche 1 bis 4, **dadurch gekennzeichnet, dass** zumindest eine der Aufnahmelaschen (19, 20) von in der Umfangsrichtung (14) des Federelementkörpers (10) nebeneinander angeordneten Aufnahmelaschen (19, 20) in radialer Richtung kürzer ausgebildet ist, als die weiteren Aufnahmelaschen (19, 20) in der Umfangsrichtung (14).

6. Federelement (4) nach einem der Ansprüche 1 bis 5, **dadurch gekennzeichnet, dass** ein maximaler Abstand (38) zwischen in axialer Richtung hintereinander angeordneten ersten Aufnahmelaschen (19) von zumindest einem Paar erster Aufnahmelaschen (19) größer ist als der maximale Abstand (38) zwischen zwei ersten Aufnahmelaschen (19) der in der Umfangsrichtung (14) des Federelementkörpers (10) nebeneinander angeordneten weiteren Paaren an ersten Aufnahmelaschen (19) und/oder dass ein maximaler Abstand (39) zwischen in axialer Richtung hintereinander angeordneten zweiten Aufnahmelaschen (20) von zumindest einem Paar zweiter Aufnahmelaschen (20) größer ist als der maximale Abstand (39) zwischen zwei zweiten Aufnahmelaschen (20) der in der Umfangsrichtung (14) des Federelementkörpers (10) nebeneinander angeordneten weiteren Paaren an zweiten Aufnahmelaschen (20).

7. Federelement (4) nach einem der Ansprüche 1 bis 6, **dadurch gekennzeichnet, dass** zumindest eine der Aufnahmelaschen (19, 20) eine kürzere maximale Laschenbreite (40, 41) in Richtung der Umfangsrichtung (14) des Federelementkörpers (10) aufweist, als die restlichen Aufnahmelaschen (19, 20).

8. Federelement (4) nach einem der Ansprüche 1 bis 7, **dadurch gekennzeichnet, dass** die beiden Federelementkörperteile (11, 12) jeweils einstückig ausgebildet sind.

9. Federelement (4) nach einem der Ansprüche 1 bis 8, **dadurch gekennzeichnet, dass** der erste Federelementkörperteil (11) zumindest im Bereich der Aufnahmelaschen (19, 20) eine Wanddicke (42) aufweist, und dass der zweite Federelementkörperteil (12) zumindest im Bereich der Aufnahmelaschen (19, 20) eine Wanddicke (43) aufweist, wobei die Wanddicke (42) im Bereich zumindest einer der Aufnahmelaschen (19, 20) des ersten Federelementkörperteils (11) im Vergleich zur Wanddicke (43) im Bereich der Aufhahmelaschen (19, 20) des zweiten Federelementkörperteils (12) kleiner ist.

10. Reibvorrichtung, insbesondere Kupplungsscheibe (1) für eine Reibungskupplung, umfassend einen scheibenförmigen Grundkörper (5) mit einem Trägerelement (8), wobei das Trägerelement (8) einen äußeren Umfang (9) aufweist, über den verteilt mehrere Reibgruppen (16, 17) angeordnet sind, wobei die Reibgruppen (16, 17) jeweils einen ersten Reibbelag (2,3) und einen in axialer Richtung dahinter angeordneten zweiten Reibbelag (2, 3) aufweisen, wobei die Reibbeläge (2, 3) mit einem Federelement (4), das wischen den ersten und den zweiten Reibbelägen (2, 3) angeordnet ist, verbunden sind, gegebenenfalls unter Zwischenanordnung jeweils eines Reibbelagsträgers (34, 35), und das Federelement (4) mit dem Trägerelement (8) verbunden ist, **dadurch gekennzeichnet**, das Federelement (4) entsprechend einem der Ansprüche 1 bis 9 ausgebildet ist, und jeder Reibbelag (2, 3) auf einer radial inneren ersten Aufnahmelasche (19) und einer radial äußeren zweiten Aufnahmelasche (20) des Federelementes (4) befestigt ist.

## Claims

1. A spring element (4) for a friction device, in particular a clutch disk (1) for a friction clutch, comprising a spring element body (10) having a first spring element body part (11) and a second spring element body part (12) disposed one behind the other in the axial direction and in contact with one another in some regions, wherein each spring element body part (11, 12) has receiving areas (15) for friction linings (2, 3) disposed adjacent to one another in a circumferential direction (13) so that the friction linings (2, 3) can be disposed on either side of the spring element body (10) and secured thereto, wherein the first spring element body part (11) and the second spring element body part (12) are of an at least approximately annular shape, **characterized in that** for each receiving area (15) for the friction linings (2, 3) a first receiving tab (19) and a second receiving tab (20) are formed, wherein the first receiving tab (19) is disposed underneath the second receiving tab (20) in the radial direction, wherein for fastening each friction lining (2, 3) to a radially inner first receiving tab (19) and a radially outer second receiving tab (20), the two spring element body parts (11, 12) are embodied so as to be at least partially spaced apart from one another in the region of the receiving tabs (19, 20), wherein, to form this spacing, the receiving tabs (19, 20) of the first spring element body part (11) are bent open to the front in the axial direction out of the plane of the first spring element body part (11), and the receiving tabs (19, 20) of the second spring element body part (12) are bent open to the back in the axial direction out of the plane of the second spring element body part (12), and, starting at a base (22), the radially inner first receiving tabs (19) have for this purpose a first beveled tab part (23) perpendicular to the axial direction of the spring element (4) with respect to the plane of the first spring element body part (11) or second spring element body part (12), and an adjoining second tab part (24), which runs at least approximately parallel to the plane of the first spring element body part (11) or second spring element body part (12) perpendicular to the axial direction of the spring element (4), and, analogous thereto, starting at a base (25), the radially outer second receiving tabs (20) have a first a beveled tab part (26) perpendicular to the axial direction of the spring element (4) with respect to the plane of the first spring element body part (11) or second spring element body part (12), and an adjoining second tab part (27), which runs at least approximately parallel to the plane of the first spring element body part (11) or second spring element body part (12) perpendicular to the axial direction of the spring element (4), and wherein in particular the first receiving tab (19) and the second receiving tab (20) of each and every receiving area (15) for the friction linings (2, 3) of the first spring element body part (11) are formed by the first spring element body part (11) and the first receiving tab (19) and the second receiving tab (20) of each and every receiving area (15) for the friction linings (2, 3) of the second spring element body part (12) are formed by the second spring element body part (12).

2. The spring element (4) according to claim 1, **characterized in that** the first receiving tabs (19) of the first spring element body part (11) are disposed respectively at least partially in a cut-out (36) of the first spring element body (11) and/or the first receiving tabs (19) of the second spring element body part (12) are disposed respectively at least partially in a cut-out (36) of the second spring element body (12).

3. The spring element (4) according to claim 1 or 2, **characterized in that** at least one of the first receiving tabs (19) is embodied to be shorter in the radial direction than the second receiving tabs (20) in the radial direction and/or at least one of the second receiving tabs (20) is embodied to be shorter in the radial direction than the first receiving tabs (19) in the radial direction.

4. The spring element (4) according to one of claims 1 to 3, **characterized in that** a maximum distance (38) between first receiving tabs (19) of at least one pair of first receiving tabs (19) disposed one behind the other in the axial direction is shorter or longer than a maximum distance (39) between two second receiving tabs (20) disposed one behind the other in the axial direction.

5. The spring element (4) according to one of claims 1 to 4, **characterized in that** at least one of the receiving tabs (19, 20) of receiving tabs (19, 20) disposed adjacent to one another in the circumferential direction (14) of the spring element body (10) is embodied to be shorter in the radial direction than the other receiving tabs (19, 20) in the circumferential direction (14).

6. The spring element (4) according to one of claims 1 to 5, **characterized in that** a maximum distance (38) between first receiving tabs (19) of at least one pair of first receiving tabs (19) disposed one behind the other in the axial direction is longer than the maximum distance (38) between two first receiving tabs (19) of the other pairs of first receiving tabs (19) disposed adjacent to one another in the circumferential direction (14) of the spring element body (10) and/or that a maximum distance (39) between second receiving tabs (20) of at least one pair of second receiving tabs (20) disposed one behind the other in the axial direction is longer than the maximum distance (39) between two second receiving tabs (20) of the other pairs of second receiving tabs (20) disposed adjacent to one another in the circumferential direction (14) of the spring element body (10).

7. The spring element (4) according to one of claims 1 to 6, **characterized in that** at least one of the receiving tabs (19, 20) has a shorter maximum tab width (40, 41) in the direction of the circumferential direction (14) of the spring element body (10) than the rest of the receiving tabs (19, 20).

8. The spring element (4) according to one of claims 1 to 7, **characterized in that** the two spring element body parts (11, 12) are each of an integral design.

9. The spring element (4) according to one of claims 1 to 8, **characterized in that** the first spring element body part (11) has a wall thickness (42), at least in the region of the receiving tabs (19, 20), and that the second spring element body part (12) has a wall thickness (43), at least in the region of the receiving tabs (19, 20), wherein the wall thickness (42) in the region of at least one of the receiving tabs (19, 20) of the first spring element body part (11) is smaller than the wall thickness (43) in the region of the receiving tabs (19, 20) of the second spring element body part (12).

10. A friction device, in particular a clutch disk (1) for a friction clutch, comprising a disk-shaped main body (5) with a support element (8), wherein the support element (8) has an external circumference (9) around which several friction groups (16, 17) are distributed, wherein the friction groups (16, 17) respectively comprise a first friction lining (2,3) and a second friction lining (2, 3) disposed behind it in the axial direction, wherein the friction linings (2, 3) are connected to a spring element (4) disposed between the first and the second friction linings (2, 3), optionally with a friction lining support (34, 35) disposed respectively in between, and the spring element (4) is connected to the support element (8), **characterized in that** the spring element (4) is embodied according to one of claims 1 to 9, and each friction lining (2, 3) is fastened to a radially inner first receiving tab (19) and a radially outer second receiving tab (20) of the spring element (4).

## Revendications

1. Élément à ressort (4) pour un dispositif à friction, plus particulièrement un disque d'embrayage (1) pour un embrayage à friction, comprenant un corps d'élément à ressort (10), qui comprend une première partie de corps d'élément à ressort (11) et une deuxième partie de corps d'élément à ressort (12), qui sont disposées l'une derrière l'autre dans la direction axiale et s'appuient partiellement l'une contre l'autre, chaque partie de corps d'élément à ressort (11, 12) comprenant des zones de logement (15), disposés les unes à côté des autres dans une direction circonférentielle (13), pour des garnitures de friction (2, 3), de façon à ce que les garnitures de friction (2, 3) soient disposées des deux côtés du corps d'élément à ressort (10) et puissent être fixés sur celui-ci, la première partie de corps d'élément à ressort (11) et la deuxième partie de corps d'élément à ressort (12) étant conçues au moins approximativement avec une forme annulaire, **caractérisé en ce que**, pour chaque zone de logement (15), pour les garnitures de friction (2, 3), une première patte de logement (19) et une deuxième patte de logement (20) sont prévues, la première patte de logement (19) étant disposée dans la direction radiale en dessous de la deuxième patte de logement (20), moyennant quoi, pour la fixation de chaque garniture de friction (2, 3) sur une première patte de logement radiale interne (19) et une deuxième patte de logement radiale externe (20), les deux parties de corps d'élément à ressort (11, 12) étant écartées entre elles au moins partiellement au niveau des pattes de logement (19, 20), moyennant quoi, pour la réalisation de cet écartement, les pattes de logement (19, 20) de la première partie de corps d'élément à ressort (11) sont pliées dans la direction axiale vers l'avant à partir du plan de la première partie de corps d'élément à ressort (11) et les pattes de logement (19, 20) de la deuxième partie de corps d'élément à ressort (12) sont pliées dans la direction axiale vers l'arrière à partir du plan de la deuxième partie de corps d'élément à ressort (12) et, pour cela, les premières pattes de logement radiales internes (19) comprennent, à partir d'une base (22), une partie de patte (23) oblique par rapport au plan de la première partie de corps d'élément à ressort (11) ou de la deuxième partie de corps d'élément à ressort (12), perpendiculairement à la direction axiale de l'élément à ressort (4) et une deuxième partie de patte (24), prolongeant celle-ci, qui s'étend au moins approximativement parallèle au plan de la première partie de corps d'élément à ressort (11) ou de la deuxième partie de corps d'élément à ressort (12) perpendiculairement par rapport à la direction axiale de l'élément à ressort (4) et, de manière analogue, les deuxièmes pattes de logement radiales externes (20) comprennent, à partir d'une base (25), une première partie de patte (26) oblique par rapport au plan de la première partie de corps d'élément à ressort (11) ou de la deuxième partie de corps d'élément à ressort (12), perpendiculairement à la direction axiale de l'élément à ressort (4) et une deuxième partie de patte (27), prolongeant celle-ci, qui s'étend au moins approximativement parallèle au plan de la première partie de corps d'élément à ressort (11) ou de la deuxième partie de corps d'élément à ressort (12) perpendiculairement par rapport à la direction axiale de l'élément à ressort (4) et, plus particulièrement, la première patte de logement (19) et la deuxième patte de logement (20) de chaque zone de logement (15) étant constituées, pour les garnitures de friction (2, 3) de la première partie de corps d'élément à ressort (11), de la première partie de corps d'élément à ressort (11) et la première patte de logement (19) et la deuxième patte de logement (20) de chaque zone de logement (15) étant constituées, pour les garnitures de friction (2, 3) de la deuxième partie de corps d'élément à ressort (12), de la deuxième partie de corps d'élément à ressort (12).

2. Élément à ressort (4) selon la revendication 1, **caractérisé en ce que** les premières pattes de logement (19) de la première partie de corps d'élément à ressort (11) sont disposées chacune au moins partiellement dans un évidement (36) du premier corps d'élément à ressort (11) et/ou les premières pattes de logement (19) de la deuxième partie de corps d'élément à ressort (12) sont disposées chacun au moins partiellement dans un évidement (36) du deuxième corps d'élément à ressort (12).

3. Élément à ressort (4) selon la revendication 1 ou 2, **caractérisé en ce qu'**au moins une des premières pattes de logement (19) sont plus courtes dans la direction radiale que les deuxièmes pattes de logement (20) dans la direction radiale et/ou au moins une des deuxièmes pattes de logement (20) est plus courte dans la direction radiale que les premières pattes de logement (19) dans la direction radiale.

4. Élément à ressort (4) selon l'une des revendications 1 à 3, **caractérisé en ce qu'**une distance maximale (38) entre des premières pattes de logement (19), disposées l'une derrière l'autre dans la direction axiale, d'au moins une paire de premières pattes de logement (19) est inférieure ou supérieure à une distance maximale (39) entre deux deuxièmes pattes de logement (20) disposées l'une derrière l'autre dans la direction axiale.

5. Élément à ressort (4) selon l'une des revendications 1 à 4, **caractérisé en ce qu'**au moins une des pattes de logement (19, 20) parmi des pattes de logement (19, 20) disposées les unes à côté des autres dans la direction circonférentielle (14) du corps d'élément à ressort (10) sont plus courtes dans la direction radiale que les autres pattes de logement (19, 20) dans la direction circonférentielle (14).

6. Élément à ressort (4) selon l'une des revendications 1 à 5, **caractérisé en ce qu'**une distance maximale (38) entre des premières pattes de logement (19), disposées l'une derrière l'autre dans la direction axiale, d'au moins une paire de premières pattes de logement (19) est supérieure à la distance maximale (38) entre deux premières pattes de logement (19) des autres paires de premières pattes de logement (19) disposées les unes à côté des autres dans la direction circonférentielle (14) du corps d'élément à ressort (10) et/ou **en ce qu'**une distance maximale (39) entre des deuxièmes pattes de logement (20), disposées l'une derrière l'autre dans la direction axiale, d'au moins une paire d'autres pattes de logement (20) est supérieure à la distance maximale (39) entre deux deuxièmes pattes de logement (20) des autres paires de deuxièmes pattes de logement (20), disposées les unes à côtés des autres dans la direction circonférentielle (14) du corps d'élément à ressort (10).

7. Élément à ressort (4) selon l'une des revendications 1 à 6, **caractérisé en ce qu'**au moins une des pattes de logement (19, 20) présente une largeur de patte maximale (40, 41) dans la direction circonférentielle (14) du corps d'élément à ressort (10) inférieure au reste des pattes de logement (19, 20).

8. Élément à ressort (4) selon l'une des revendications 1 à 7, **caractérisé en ce que** les deux parties de corps d'élément à ressort (11, 12) sont chacune réalisées d'une seule pièce.

9. Élément à ressort (4) selon l'une des revendications 1 à 8, **caractérisé en ce que** la première partie de corps d'élément à ressort (11) présente, au moins au niveau des pattes de logement (19, 20), une épaisseur de paroi (42) et **en ce que** la deuxième partie de corps d'élément à ressort (12) présente, au moins au niveau des pattes de logement (19, 20), une épaisseur de paroi (43), l'épaisseur de paroi (42) au niveau d'au moins une des pattes de logement (19, 20) de la première partie de corps d'élément à ressort (11) étant inférieure à l'épaisseur de paroi (43) au niveau des pattes de logement (19, 20) de la deuxième corps d'élément à ressort (12).

10. Dispositif à friction, plus particulièrement disque d'embrayage (1) pour un embrayage à friction, comprenant un corps de base (5) en forme de disque avec un élément de support (8), l'élément de support (8) comprenant une circonférence externe (9), sur laquelle sont répartis plusieurs groupes de friction (16, 17), les groupes de friction (16, 17) comprenant chacun une première garniture de friction (2, 3) et une deuxième garniture de friction (2, 3) disposée derrière dans la direction axiale, les garnitures de friction (2, 3) étant reliées avec un élément à ressort (4) qui est disposé entre la première et la deuxième garnitures de friction (2, 3), le cas échéant avec l'intercalage à chaque fois d'un support de garniture de friction (34, 35), et l'élément à ressort (4) étant relié avec l'élément de support (8), **caractérisé en ce que** l'élément à ressort (4) est conçu selon l'une des revendications 1 à 9 et chaque garniture de friction (2, 3) est fixée sur une première patte de logement radiale interne (19) et une deuxième patte de logement radiale externe (20) de l'élément à ressort (4).
